# FASCICULE DE BREVET EUROPEEN

(11) **EP 0 628 472 B1**
(45) Date de publication et mention de la délivrance du brevet: **29.12.1997**
(21) Numéro de dépôt: 94401240.0
(22) Date de dépôt: 06.06.1994
(51) Int. Cl.: B62H 5/00

(54) **Dispositif antivol pour véhicule et, notamment quoique non exclusivement, pour véhicule à deux roues**
Kraftfahrzeug-Diebstahlsicherung insbesondere, aber nicht auschliesslich, für ein Zweiradfahrzeug
Vehicle anti-theft device in particular but not exclusively for a two-wheeled vehicle

(30) Priorité: 11.06.1993 FR 9307031
(43) Date de publication de la demande: 14.12.1994
(73) Titulaire: M B K INDUSTRIE, F-02100 Saint Quentin (FR)
(72) Inventeur: Lakic, Sacha, MBK Industrie, F-02100 Saint Quentin (FR)
(74) Mandataire: Maureau, Philippe

(56) Documents cités:
- EP-A- 0 492 742
- CH-A- 238 250
- DE-U- 8 913 587
- FR-A- 991 793
- US-A- 5 063 762

## Description

La présente invention concerne un dispositif antivol pour véhicule, et notamment, quoique non exclusivement, un véhicule motorisé à deux roues tel qu'une motocyclette, du type constitué par un lien souple, généralement formé par un câble en acier, ou par des maillons d'une chaîne, enveloppé d'une gaine de protection, dont une extrémité est solidaire et indémontable de la structure du véhicule et dont l'autre extrémité, ou extrémité libre, est destinée à être engagée et verrouillée dans la gâche d'une première serrure également solidaire et indémontable de la structure du véhicule et appartenant au dispositif antivol, après qu'il ait été manipulé pour envelopper un objet fixe tel qu'un poteau ou autre similaire.

L'efficacité de ce dispositif connu et très répandu n'a plus à être démontrée. Cependant, lorsque le véhicule est en service, le lien souple constitue toujours un inconvénient car, soit son extrémité libre est laissée libre et il pend et oscille dangereusement en fonction des mouvements du véhicule, soit son extrémité libre est engagée et verrouillée dans la gâche de serrure et la boucle relativement rigide qu'il forme constitue une gêne pour le conducteur ou le passager du véhicule.

Pour remédier à cet inconvénient, selon l'invention, le dispositif comprend en outre une seconde serrure, solidaire de la structure du véhicule, dans la gâche de laquelle l'extrémité libre du lien souple peut être engagée après qu'il ait été manipulé de manière à épouser parfaitement un contour déterminé de la structure du véhicule, tel qu'une gorge périphérique du support de selle.

Suivant une forme d'exécution préférée de l'invention, au moins le trou de clé de la première serrure prévue pour l'immobilisation du véhicule, mais, de préférence, les trous de clé des deux serrures ne sont accessibles que par l'intérieur du coffre situé sous la selle, c'est-à-dire qu'après déverrouillage et soulèvement de la selle.

De préférence, la clé de déverrouillage des deux serrures du dispositif antivol est la même que celle servant à l'ouverture du coffre situé sous la selle.

De toute façon, l'invention sera bien comprise à l'aide de la description qui suit, en référence au dessin schématique annexé représentant, à titre d'exemple non limitatif, une forme d'exécution de ce dispositif dans le cadre de son application à une motocyclette :
Figure 1 est une vue partielle en perspective montrant la partie postérieure d'une motocyclette, c'est-à-dire le coffre supportant la selle, muni du dispositif selon l'invention en position correspondant à l'immobilisation verrouillée de la motocyclette ;
Figure 2 est une vue de côté en élévation montrant la motocyclette de figure 1 avec son dispositif d'immobilisation verrouillé en position route ;
Figure 3 est une vue en perspective montrant uniquement la structure de la motocyclette des figures 1 et 2, c'est-à-dire dépourvue de tous ses éléments techniques et de sa carrosserie.

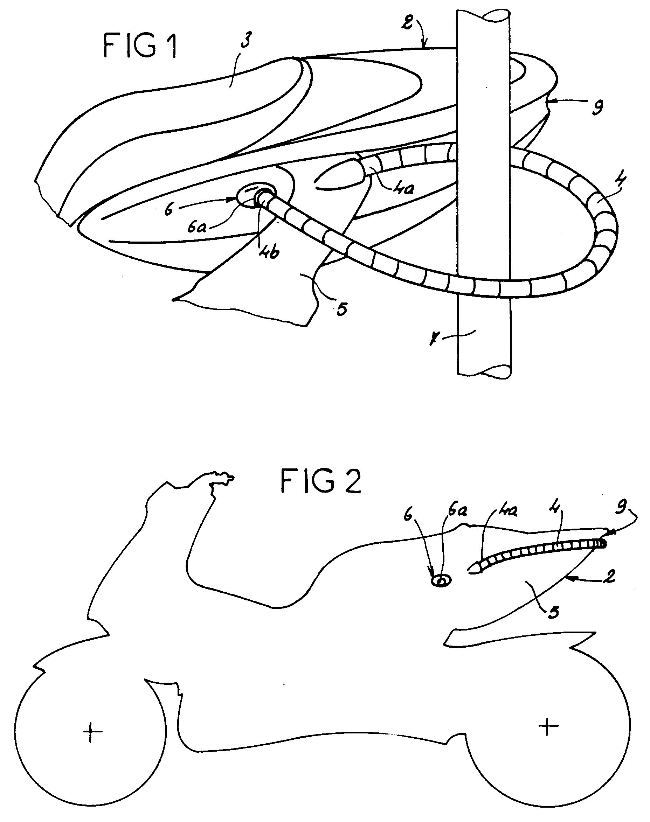

Sur la figure 1 est représenté le coffre 2 d'une motocyclette aménagé sous sa selle 3 qui, pour rendre le coffre 2 accessible, est articulée, par son extrémité avant, sur la structure de la motocyclette et est munie d'une serrure, non visible sur le dessin, de verrouillage de la selle 3 en position de fermeture du coffre 2, c'est-à-dire en position route.

Comme le montre cette figure 1, cette motocyclette est équipée d'un dispositif antivol d'immobilisation verrouillée du type constitué par un lien souple 4 formé d'un câble multi-brins ou d'une chaîne à maillons enveloppée dans une gaine extérieure de protection. Ce lien souple 4 est fixé, par l'une 4a de ses extrémités et de manière indémontable, à la structure 5 de cette motocyclette, tandis que son autre extrémité ou extrémité libre 4b est destinée à être engagée dans la gâche 6a d'une première serrure de verrouillage 6 solidaire de manière indémontable de la structure 5 de la motocyclette.

Naturellement, comme le montre la figure 1, l'engagement de l'extrémité libre du lien souple 4 dans la gâche 6a de la serrure 6 est effectué après que le lien ait été manipulé pour entourer un poteau fixe 7 ou autre élément fixe similaire.

Pour éviter qu'en position de route, c'est-à-dire de non immobilisation verrouillée de la motocyclette, le lien 4 ne constitue un inconvénient soit par son balancement, si son extrémité libre n'est pas engagée dans la gâche 6a de la serrure 6, soit par la boucle relativement rigide qu'il forme après cet engagement, il est prévu, selon l'invention, une seconde serrure 8 comportant une gâche 8a dans laquelle l'extrémité libre du lien 4 peut être engagée et verrouillée en position route de la motocyclette.

Comme le montre plus particulièrement la figure 2, l'emplacement de la seconde serrure 8 est déterminé de manière que le lien 4 soit logé dans le fond d'une gorge 9 ménagée pour lui servir de lit sur une partie postérieure du pourtour du coffre 2.

De cette manière, le lien 4 ne constitue ni une gêne, ni un danger pour le conducteur de cette motocyclette, et ne nuit pas à l'esthétique de celle-ci.

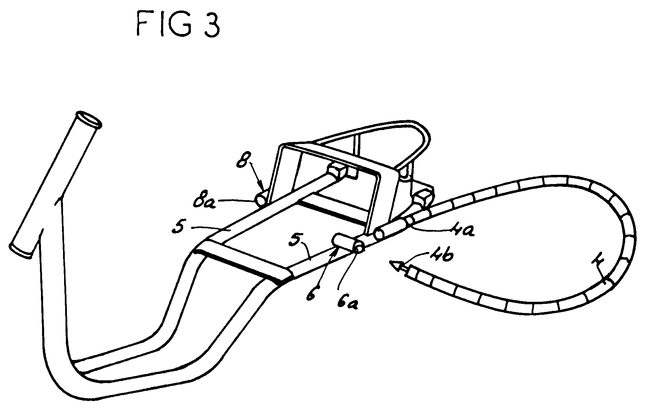

Comme le montre le dessin, le trou pour l'engagement d'une clé, au moins dans la première serrure 6 servant au verrouillage de la motocyclette immobilisée, est disposé de manière à n'être accessible que par l'intérieur du coffre 2 de la motocyclette, comme cela est visible sur la figure 3.

En outre, de préférence, la première serrure 6 utilisée pour l'immobilisation verrouillée de la motocyclette est la même que celle qui permet de déverrouiller la selle en position de fermeture du coffre 2.

Naturellement, la seconde serrure 8 peut être une serrure sans clé avec seulement la présence d'un levier d'encliquetage non visible sur le dessin et dont, de préférence, l'extrémité de manoeuvre n'est accessible que depuis l'intérieur du coffre 2. Mais, cette seconde serrure 8 peut aussi être une serrure manoeuvrable à l'aide d'une clé, comme la première serrure 6, avec son trou de serrure accessible que depuis l'intérieur du coffre 2.

Dans ce cas, la clé d'ouverture de la seconde serrure 8 est, de préférence, la même que celle de l'ouverture de la première serrure 6.

Comme il va de soi, l'invention ne se limite pas à la seule forme d'exécution de cet antivol, décrite ci-dessus à titre d'exemple ; elle en embrasse, au contraire, toutes les variantes.

C'est ainsi notamment que, dans le cas d'un scooter, l'antivol pourrait être associé non pas à la partie du véhicule comportant la selle mais, par exemple, à la plate-forme de celui-ci sur laquelle reposent les pieds de l'utilisateur, sans que l'on sorte pour autant du cadre de l'invention.

## Revendications

1. Dispositif antivol pour véhicule et, notamment, quoique non exclusivement, pour véhicule à deux roues, du type constitué par un lien souple (4), généralement formé par un câble en acier, ou par des maillons d'une chaîne, enveloppé d'une gaine de protection, dont une extrémité (4a) est solidaire et indémontable de la structure (5) du véhicule et dont l'autre extrémité ou extrémité libre (4b), est destinée à être engagée et verrouillée dans la gâche (6a) d'une première serrure (6) également solidaire et indémontable de la structure (5) du véhicule et appartenant au dispositif antivol, après qu'il ait été manipulé pour envelopper un objet fixe (7) tel qu'un poteau ou autre similaire, caractérisé en ce que le dispositif antivol comprend en outre une seconde serrure (8), solidaire de la structure (5) du véhicule, dans la gâche (8a) de laquelle l'extrémité libre (4b) du lien souple (4) peut être engagée après qu'il ait été manipulé de manière à épouser parfaitement un contour déterminé de la structure du véhicule, tel qu'une gorge périphérique (9) du support de selle (3) ou d'un coffre (2).

2. Dispositif antivol selon la revendication 1, caractérisé en ce qu'au moins le trou de clé de la première serrure (6) prévue pour l'immobilisation du véhicule mais, de préférence, les trous de clé des deux serrures (6, 8) ne sont accessibles que par l'intérieur du coffre (2) situé sous la selle (3), c'est-à-dire qu'après déverrouillage et soulèvement de la selle (3).

3. Dispositif antivol selon la revendication 1 ou 2, caractérisé en ce que la clé de déverrouillage des deux serrures (6, 8) du dispositif antivol est la même que celle servant à l'ouverture du coffre (2) situé sous la selle (3).

4. Dispositif antivol selon la revendication 1 ou 2, caractérisé en ce que la seconde serrure (8) ou serrure servant à la position route du lien souple (4) est du type verrouillable à l'aide d'un levier d'encliquetage.

5. Dispositif antivol selon la revendication 4, caractérisé en ce que le levier d'encliquetage de la seconde serrure (8) n'est accessible que par l'intérieur du coffre (2).

## Claims

1. Antitheft device for a vehicle, and particularly though not exclusively for a two-wheeled vehicle, of the type comprising a flexible linkage (4), generally in the form of a steel cable, or of the links of a chain, covered by a protective sheath, one end (4a) of which is integral with and non-removable from the structure (5) of the vehicle, and the other end of which, or free end (4b), is intended to be engaged and locked in the keeper (6a) of a first lock (6) which is likewise integral with and non-removable from the structure (5) of the vehicle, and belonging to the antitheft device, after it has been manipulated to surround a fixed object (7) such as a post or the like, characterised in that the antitheft device in addition comprises a second lock (8), integral with the structure (5) of the vehicle, in the keeper (8a) of which the free end (4b) of the flexible linkage (4) may be engaged after being manipulated so as perfectly to surround a specific contour of the structure of the vehicle, such as a peripheral groove (9) of the saddle support (3) or of a trunk (2).

2. Antitheft device according to claim 1, characterised in that at least the keyhole of the first lock (6) provided for immobilising the vehicle, but preferably the keyholes of the two locks (6, 8), are only accessible from the interior of the trunk (2), i.e. after the saddle (3) has been unlocked and raised.

3. Antitheft device according to claim 1 or 2, characterised in that the key for unlocking the two locks (6, 8) of the antitheft device is the same as that serving to open the trunk (2) located beneath the saddle (3).

4. Antitheft device according to claim 1 or 2, characterised in that the second lock (8), or the lock serving for the road position of the flexible linkage (4), is of the type which is lockable with the aid of a latching lever.

5. Antitheft device according to claim 4, characterised in that the latching lever of the second lock (8) is accessible only through the interior of the trunk (2).

## Patentansprüche

1. Kraftfahrzeug-Diebstahlsicherung insbesondere, aber nicht ausschließlich, für ein Zweiradfahrzeug, aus einem flexiblen Verbindungsteil (4), dieses im wesentlichen bestehend aus einem Stahlkabel oder aus den Gliedern einer Kette, umgeben von einem Schutzschlauch, dessen eines Ende (4a) fest und unlösbar mit der Konstruktion (5) des Fahrzeugs verbunden und dessen anderes Ende oder freies Ende (4b) dazu bestimmt ist, in die Schloßplatte (6a) eines ersten Schlosses (6) einzugreifen und damit verriegelt zu werden, welches ebenfalls fest und unlösbar mit der Konstruktion (5) des Fahrzeugs verbunden ist und zu der Diebstahlsicherung gehört, nachdem es um ein festes Objekt (7) wie einen Pfosten oder dergleichen herumgelegt wurde, dadurch gekennzeichnet, daß die Diebstahlsicherung außerdem ein zweites, fest mit der Konstruktion (5) des Fahrzeugs verbundenes Schloß (8) aufweist, in dessen Schloßplatte (8a) das freie Ende (4b) des flexiblen Verbindungsteils (4) eingreifen kann, nachdem es eng anliegend um eine festgelegte Kontur der Konstruktion des Fahrzeugs herumgelegt wurde, zum Beispiel eine Rille am Umfang (9) der Sitzhalterung (3) oder eines Kastens (2).

2. Diebstahlsicherung nach Anspruch 1, dadurch gekennzeichnet, daß zumindest das Schlüsselloch des ersten Schlosses (6), welches für die Verriegelung des Fahrzeugs vorgesehen ist, vorzugsweise jedoch die Schlüssellöcher beider Schlösser (6, 8) nur vom Inneren des unter dem Sitz (3) befindlichen Kastens (2) aus zugänglich sind, d.h. nach dem Entriegeln und Anheben des Sitzes (3).

3. Diebstahlsicherung nach Anspruch 1 oder 2, dadurch gekennzeichnet, daß der Entriegelungsschlüssel der beiden Schlösser (6, 8) der Diebstahlsicherung derselbe ist wie derjenige, der zum Öffnen des unter dem Sitz (3) befindlichen Kastens (2) dient.

4. Diebstahlsicherung nach Anspruch 1 oder 2, dadurch gekennzeichnet, daß das zweite Schloß (8) oder das Schloß, welches als Fahrposition für das flexible Verbindungsteil (4) dient, mit Hilfe eines Einrasthebels verriegelbar ist.

5. Diebstahlsicherung nach Anspruch 4, dadurch gekennzeichnet, daß der Einrasthebel des zweiten Schlosses (8) nur vom Inneren des Kastens (2) aus zugänglich ist.
